Europäisches Patentamt

European Patent Office

Office européen des brevets

(19)

(11) Veröffentlichungsnummer: **0 048 982**
**B1**

(12) **EUROPÄISCHE PATENTSCHRIFT**

(45) Veröffentlichungstag der Patentschrift:
**10.04.85**

(51) Int. Cl.⁴: **F 24 J 2/04, E 04 D 1/30**

(21) Anmeldenummer: **81107684.3**

(22) Anmeldetag: **28.09.81**

(54) **Dacheindeckungselement aus Kunststoff zur Gewinnung von Sonnenenergie.**

(30) Priorität: **30.09.80 DE 3036897**

(43) Veröffentlichungstag der Anmeldung:
**07.04.82 Patentblatt 82/14**

(45) Bekanntmachung des Hinweises auf die Patenterteilung:
**10.04.85 Patentblatt 85/15**

(84) Benannte Vertragsstaaten:
**AT BE CH DE FR GB IT LI NL SE**

(56) Entgegenhaltungen:
**AT - B - 297 307**
**DE - A - 2 529 095**
**DE - A - 2 724 314**
**DE - A - 2 818 475**
**DE - A - 2 851 810**

(73) Patentinhaber: **Weitzel, Hans, Binger Strasse 29,
D-6507 Ingelheim/Rhein (DE)**

(72) Erfinder: **Weitzel, Hans, Binger Strasse 29,
D-6507 Ingelheim/Rhein (DE)**

(74) Vertreter: **Hain, Leonhard, Dipl.-Ing., Tal 18/IV,
D-8000 München 2 (DE)**

ACTORUM AG

**Beschreibung**

Die Erfindung betrifft ein Dacheindeckungselement aus Kunststoff zur Gewinnung von Sonnenenergie, insbesondere ein mit einem handelsüblichen Dacheindeckungselement austauschbares Dacheindeckungselement, mit einem in einem Plattenkörper vorgesehenen Durchflusskanal für eine Wärmeträgerflüssigkeit, mit an den Enden dieses Durchflusskanales ausgebildeten Anschlussorganen zur Verbindung mit angrenzenden Dacheindeckungselementen sowie mit zu einer üblichen Dachauflattung passenden Einhängeorganen.

Es sind als Sonnenkollektoren verwendbare Dacheindeckungselemente (DE-U-7 613 567) bekannt, bei denen die obere, der Sonne zugewandte Fläche transparent ausgebildet ist und die die Form und Grösse einer üblichen Dachpfanne aufweisen, so dass diese gegen übliche Dachpfannen oder Dachziegel ausgetauscht werden können. Auf der Rückseite dieser transparenten Dachpfanne ist eine Durchflusskammer vorgesehen, an der die Vor- und Rücklaufanschlüsse ausgebildet sind und in der zur mehrfachen Umlenkung der Flüssigkeit Zwischenwände eingebaut sind. Auch wenn dieses bekannte Dacheindeckungselement aus Kunststoff bestehen kann, so besteht es doch aus mindestens zwei verschiedenen Formteilen, die nach ihrer Formung noch zusammengefügt werden müssen. Daraus ergibt sich ein Mehraufwand bei der Herstellung. Die kastenförmige Durchflusskammer macht diese Dachpfanne ausserdem unhandlich und erschwert ihre Verlegung. Eine kastenförmige Durchflusskammer mit ihrem grossen Durchflussquerschnitt nimmt ferner eine grössere Flüssigkeitsmenge auf, als durch die Anschlussorgane durchfliessen kann. Daher ist nicht gewährleistet, dass aus der einzelnen Dachpfanne immer das am meisten erwärmte Wasser entnommen wird. Die verhältnismässig grossen Wassermengen in den Durchflusskammern führen ausserdem zu verhältnismässig langen Aufwärmzeiten, wodurch das ganze System träge wird. Eine Durchflusskammer vermeidet eine andere bekannte Dachpfanne (DE-U-80 00 101), in deren Plattenkörper ein Kunststoffrohr als Durchflusskanal verlegt ist. Dieser Plattenkörper, beispielsweise aus Zement, ist im Querschnitt rechteckig mit planen Ober- und Unterflächen. Da die mäander- bzw. schlangenförmig eingelagerten Kunststoffrohre den Plattenkörper stark schwächen, sind zur Erzielung der notwendigen Drucksicherheit zusätzliche Stützschichten erforderlich. Dadurch wird der Herstellungsaufwand beträchtlich vergrössert, wie auch schon das Einlagern eines Kunststoffrohres in einen Plattenkörper dessen Fertigung wesentlich erschwert und verteuert.

Der Erfindung liegt daher die Aufgabe zugrunde, ein Dacheindeckungselement mit einem Durchflusskanal für eine Wärmeträgerflüssigkeit zu schaffen, das einfacher, widerstandsfähiger und auch wesentlich billiger herzustellen ist.

Zur Lösung dieser Aufgabe ist ein Dacheindeckungselement der eingangs genannten Art gemäss der Erfindung dadurch gekennzeichnet, dass der Durchflusskanal als ein rohrförmiger Hohlraum in den Plattenkörper so eingeformt ist, dass die Plattenkörper-Oberfläche entsprechend dem Plattenprofil unverändert erhalten bleibt, während seine Unterfläche den Verlauf des Durchflusskanals entlang ausgebaucht ist.

Dadurch, dass in den Plattenkörper ein rohrförmiger Durchflusskanal geeigneten Querschnittes direkt eingeformt ist, ergibt sich eine wesentlich einfachere und billigere Herstellungsweise, weil dieser Plattenkörper in einem einzigen Formvorgang gefertigt werden kann.

Besonders vorteilhaft wird der Durchflusskanal durch Blasformen bei der Formgebung des Plattenkörpers eingeformt. Auf diese Weise lässt sich ein dünnwandiger Plattenkörper mit allen gewünschten Profilierungen an der Ober- und Unterfläche gewinnen.

Zweckmässig ist es, den Plattenkörper mit einer verlängerten Überdeckschürze zu versehen, wodurch die Abdichtung am Plattenfuss verbessert und die notwendigen Höhenunterschiede überbrückt werden können. Eine entsprechend lange Überdeckschürze kann stirnseitige Abdeckleisten und Nuten entbehrlich machen.

Durch eine mittelachsige Anbringung der Anschlussorgane in Verlängerung des Durchflusskanales können die Platten bzw. deren Kanäle auf kürzestem Weg miteinander verbunden werden. Zweckmässige Steckorgane mit einem elastischen Zwischenstück erleichtern das Zusammenstecken und gleichen Toleranzen an den Platten oder in deren Verlegung aus.

Wird ein Dacheindeckungselement von der Form einer üblichen Dachpfanne hergestellt, dann kann ein entsprechend voluminöser Plattenkörper dadurch erreicht werden, dass ausser dem Durchflusskanal weitere Plattenkörper-Formteile, wie z.B. die Übergreif- und Untergreifleisten und/oder die Begrenzungswulste, hohl ausgebildet sind.

Sowohl die hohlen Über- und Untergreifleisten als auch zusätzliche Begrenzungswulste können sich über den Durchflusskanal erheben und so Räume zur Aufnahme von Wärmeisolierstoffen schaffen.

Die Erfindung wird nachfolgend anhand von Ausführungsbeispielen, die auch in der Zeichnung dargestellt sind, näher beschrieben. Es zeigen:

Fig. 1 eine perspektivische Draufsicht auf ein erstes Dacheindeckungselement,

Fig. 2 einen Schnitt nach der Linie II-II der Fig. 1,

Fig. 3 eine Untersicht hierzu,

Fig. 4 einen Schnitt durch eine Steckverbindung, vergrössert,

Fig. 5 eine Ansicht auf die Kopfseite einer Dach-Pfanne üblicher Form

Fig. 6 eine Untersicht hierzu

Fig. 7 einen Längsschnitt durch diese Dach- pfanne und

Fig. 8 einen Schnitt nach der Linie VIII-VIII der Fig. 6

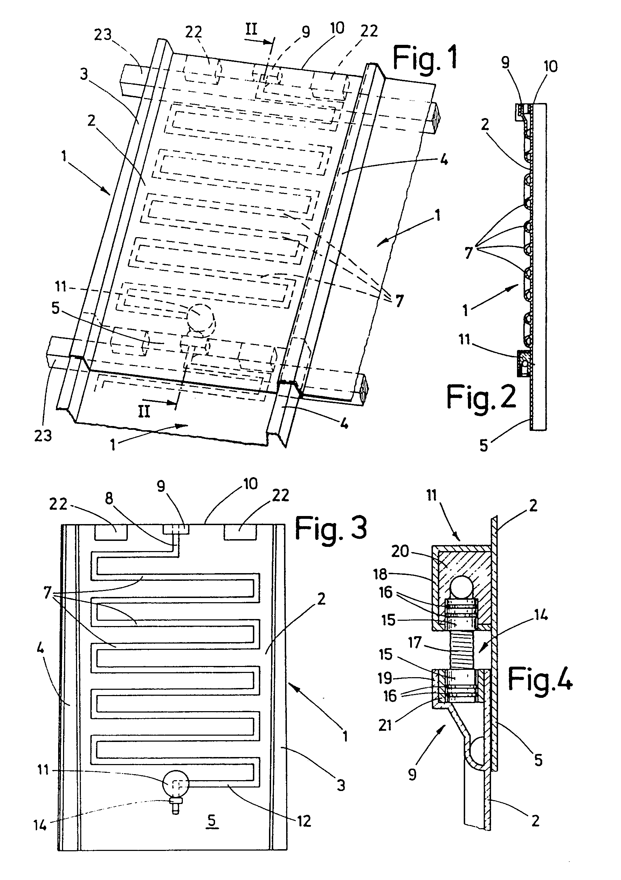

Das in den Fig. 1 bis 3 dargestellte Dacheindekkungselement weist einen Plattenkörper 1 in Form einer Tafel 2 auf, an der seitliche Unter- und Übergreifleisten 3 bzw. 4 ausgebildet sind. Der Plattenkörper ist um eine Überdeckschürze 5 verlängert, die in Eindeckstellung den folgenden Plattenkörper überdeckt. Das Dacheindeckungselement ist in seiner Form und in seinen Abmessungen zweckmässig so ausgelegt, dass es gegen ein übliches, genormtes Element austauschbar ist. Daher kann es auch nachträglich in jeder Dacheindeckung in mehr oder weniger grosser Fläche zum Einsatz kommen. Passunterschiede an den Anschlusswänden zur herkömmlichen Dachhaut lassen sich durch Dichtstoffe oder -bänder gut abdichten. Auf der Unterfläche des Plattenkörpers ist ein mäanderförmiger Durchflusskanal 7 ausgebildet, der sich annähernd auf die ganze Plattenbreite erstreckt. Mit seinem oberen Ende 8 schliesst dieser Kanal an eine Steckbohrung 9 an, die bündig mit der Kopfkante 10 der Tafel endet. Eine Steckbohrung 11 ist am unteren Kanalende 12 in einem Abstand von der oberen Steckbohrung 9 vorgesehen, der dem Abstand der Eindeck oder Dachlatten 23 entspricht. Die untere Steckbohrung 11 ist daher am Übergang zur Überdeckschürze 5 vorgesehen. Die beiden Steckbohrungen sind zweckmässig auf der Längsmittellinie aufeinander ausgerichtet. Zur Verbindung der Steckbohrungen dient ein Steckrohr 14 (Fig. 4), das an seinen beiden Einsteckköpfen 15 aufgezogene Dichtringe 16 aufweist. Die Verbindung der beiden Einsteckköpfe erfolgt mittels eines flexiblen Rohres 17. Die Steckbohrungen und die Einsteckköpfe sind auf Passitz gearbeitet. Dazu können in an der Tafel bzw. Pfanne angeformten Gehäusen 18, 19 die Einsatzstücke 20, 21 aus geeignetem Werkstoff eingebracht sein. Am Kopfende der Tafel sind noch Einhängenasen 22 angeformt, die in die Dachlatten 23 eingreifen.

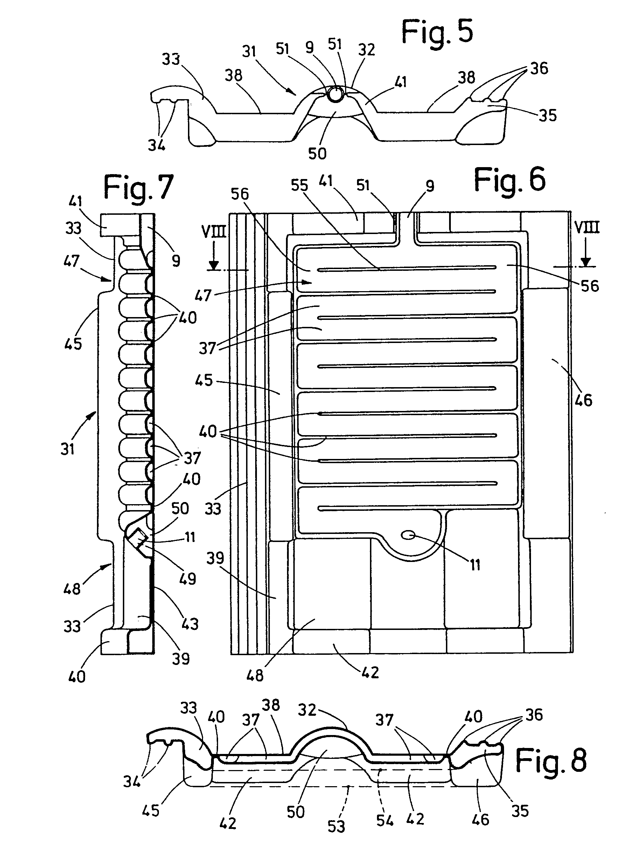

Ein Eindeckungselement gemäss den Fig. 5 bis 8 weist einen pfannenförmigen Plattenkörper 31 in Form einer üblichen Dachpfanne auf. Dieser bildet beispielsweise eine Mittelrolle 32 und auf einer Längsseite eine Übergreifleiste 33 mit Übergreifrippen 34 auf der Unterseite. An der anderen Längsseite des Plattenkörpers sind die hierzu passenden Untergreifrippen 36 an einer Untergreifleiste 35 angeformt. Ein Durchflusskanal 37 erstreckt sich wiederum auf die Breite des eigentlichen Plattenkörpers mit den beiden Abflachungen 38 und der Mittelrolle 32. Dieser Durchflusskanal ist, wie vorher, so in den Plattenkörper eingeformt, dass er im wesentlichen aus der Unterfläche des Plattenkörpers herausgeformt ist, hingegen die Oberfläche unverändert glatt bleibt.

Die Steckbohrung 9 an der Pfannen-Kopfseite endet bündig mit dieser Stirnkante, während die Steckbohrung 11 (Fig. 6, 7) am Fussende am Beginn der Überdeckschürze 39 zweckmässig als schräggestellte Einbuchtung 49 ausgebildet ist.

Vorteilhaft werden die Durchflusskanäle 7, 37 durch Blasformen in den aus Kunststoff hergestellten Plattenkörper eingeformt. Ein verformbarer Kunststoff, wie entsprechend stabilisiertes Polypropylen, eignet sich besonders gut für die Herstellung solcher Dacheindeckungselemente. Beim Blasformen lassen sich auch die übrigen Profilierungen an der Ober- und Unterfläche gut und exakt ausbilden. Dadurch dass noch im plastischen Zustand ein Vorformling mittels einer Blasform ausgeformt wird, entstehen zwischen den Hohlräumen des Durchflusskanales sogenannte Quetschkanten bzw. Quetschfalten 40, deren Wanddicke stärker als die Kanalwand ist.

Als vorteilhaft hat sich erwiesen ausser dem Durchflusskanal auch die seitlichen Über- und Untergreifleisten 33, 35 mit ihren Rippen 34, 36 zu Hohlkörpern (Fig. 8) auszubilden. Auch die Kopf- und Fussrippen 41, 42 der Dachpfanne können hohl ausgebildet sein, wie Fig. 7 zeigt. Dies kann auch auf die Überdeckschürze 39 zutreffen, wenn sie mittels einer zusätzlichen Hohlwand 43 versteift wird.

Weiterhin sind längs der seitlichen Über- und Untergreifleisten 33, 35 der Dachpfanne, zweckmässig ebenfalls hohle Begrenzungswulste 45, 46 ausgebildet, die sich zwischen einem kopfseitigen Lattenauflage-Abschnitt 47 und einem Überdeckungs-Abschnitt 48 erstrecken. Da diese Begrenzungswulste sich somit in der Dacheindeckstellung zwischen den Dachlatten befinden, können sie ausreichend hoch sein, um ein Bett zur Aufnahme eines Wärmeisolierstoffes 53 (Fig. 8 gestrichelt) zu bilden. Ebenfalls kann der Raum zwischen den sich über den Durchflusskanal erhebenden Über- und Untergreifleisten 33 und 35 im Bereich der Lattenauflage- und Überdeckungs-Abschnitte 47 bzw. 48 mit einem Wärmeisolierstoff 54 (Fig. 8 gestrichelt) ausgefüllt sein. Unmittelbar nach dem Formen der Plattenkörper lassen sich diese Isolierschichten gut und einfach darauf aufbringen und dauerhaft durch Kleben od. dgl. befestigen.

Die Steckbohrung 9 an der Kopfseite wird, wie Fig. 5 und 6 zeigen, dadurch zu einer Rundbohrung geformt, dass beiderseits Quetschfalten 51 gebildet werden die auch mit den seitlichen Kopfrippen 41 in Verbindung stehen. Die Steckbohrung 11 am Auslaufende des Durchflusskanales ist als eine Einbuchtung 49 in einer hohlen Erweiterung 50 am Kanalende geformt (Fig. 7).

Wie insbesondere die Untersicht gemäss Fig. 6 erkennen lässt, nimmt der Durchflusskanal 37 in seiner mäanderförmigen Anordnung bis auf die schmalen Zwischenstege 40 im wesentlichen die gesamte der Sonne ausgesetzte Plattenfläche ein. Um den Flüssigkeitszustrom am Platten-Kopfende nicht zu stauen, sondern möglichst rasch in den Durchflusskanal zu verteilen, ist eine Prallwand 55 mit beidseitigen Durchtrittsöffnungen 56 vorgesehen.

Bei einem Hohlraum-Plattenkörper gemäss den Figuren 5 bis 8, dessen Wanddicke weitgehend den üblichen Volumen-Dimensionierungen von Ton- bzw. Beton-Ziegeln angepasst sein kann, können zur Erhöhung seines Gewichtes die nicht von der Wärmeträgerflüssigkeit durchströmten Hohlräume ebenfalls mit einer Flüssigkeit oder einem anderen festen Werkstoff ausgefüllt sein, so dass dieses Dacheindeckungselement dann auch gewichtsmässig einem herkömmlichen entspricht.

Die Unter- und Übergreifleisten, Falze od. dgl. können auch anderen Profilen angepasst sein. Sofern sich diese Leisten weit überdecken, ist es insbesondere bei der Tafelform 7 zweckmässig, sie zur oberen Kopfkante hin leicht zu verjüngen, damit die Plattenkörper gut abdichtend aufeinandergesetzt werden können. Es kann auch zweckmässig sein, eine Fussrippe entlang dem freien Plattenrand vorzusehen. Die Plattengrösse kann bei allen Ausführungen auch einem Vielfachen einer Normgrösse entsprechen.

Werden die Plattenkörper zur Wärmedämmung nicht direkt mit Isolierstoff, wie Kunstschaumstoff ausgestattet, dann kann die eingedeckte Fläche auch insgesamt mit einer durchgehenden Isolierschale versehen sein (nicht gezeichnet).

**Patentansprüche**

1. Dacheindeckungselement aus Kunststoff zur Gewinnung von Sonnenenergie, insbesondere ein mit einem handelsüblichen Dacheindeckungselement austauschbares Dacheindeckungselement, mit einem in einem Plattenkörper (1, 31) vorgesehenen Durchflusskanal (7, 37) für eine Wärmeträgerflüssigkeit, mit an den Enden dieses Durchflusskanales ausgebildeten Anschlussorganen zur Verbindung mit angrenzenden Dacheindeckungselementen sowie mit zu einer üblichen Dachauflattung passenden Einhängeorganen (22, 41), dadurch gekennzeichnet, dass der Durchflusskanal (7, 37) als ein rohrförmiger Hohlraum in den Plattenkörper (1, 31) so eingeformt ist, dass die Plattenkörper-Oberfläche entsprechend dem Plattenprofil unverändert erhalten bleibt, während seine Unterfläche den Verlauf des Durchflusskanales entlang ausgebaucht ist.

2. Dacheindeckungselement nach Anspruch 1, dadurch gekennzeichnet, dass der Durchflusskanal (7, 37) durch Blasformen in den Plattenkörper (1, 31) eingeformt ist.

3. Dacheindeckungselement nach Anspruch 1 oder 2, dadurch gekennzeichnet, dass der Durchflusskanal (7, 37) sich mäander- oder schlangenförmig vom Kopf- bis zum Fussende des Plattenkörpers erstreckt.

4. Dacheindeckungselement nach einem der Ansprüche 1 bis 3, dadurch gekennzeichnet, dass der Plattenkörper (1, 31) an seinem Fussende um eine Überdeckschürze (5) verlängert ist.

5. Dacheindeckungselement nach einem der Ansprüche 1 bis 4, dadurch gekennzeichnet, dass die an den Enden des Durchflusskanales (7, 37) vorgesehenen Anschlussorgane als Einsteckbohrungen (9, 11) zur Aufnahme für ein Steckrohr (14) ausgebildet sind.

6. Dacheindeckungselement nach Anspruch 5, dadurch gekennzeichnet, dass das Steckrohr (14) aus Einsteckköpfen (15) und einem flexiblen Zwischenrohr (17) besteht.

7. Dacheindeckungselement nach einem der Ansprüche 1 bis 6, dadurch gekennzeichnet, dass die Einsteckbohrung (9) am Plattenkörper-Kopfende bündig mit der Kopfkante (10) endet.

8. Dacheindeckungselement nach Anspruch 7, dadurch gekennzeichnet, dass diese Einsteckbohrung (9) mittels beim Blasformen gebildeten Quetschfalten (51) mit den angrenzenden Kopfrippen (41) verbunden ist.

9. Dacheindeckungselement nach einem der Ansprüche 1 bis 8, dadurch gekennzeichnet, dass die am Durchflusskanal-Ausgang vorgesehene Einsteckbohrung (11) als Einbuchtung (49) in einer Kanalerweiterung (50) ausgebildet ist.

10. Dacheindeckungselement nach einem der Ansprüche 1 bis 9, dadurch gekennzeichnet, dass auf der Unterseite der Übergreif- und Untergreifleisten (33, 35) zwischen dem Lattenauflage-Abschnitt (47) und dem Überdeckungs-Abschnitt (48) sich über die Durchflusskanal-Ausbauchungen erhebende Begrenzungswulste (45, 46) ausgebildet sind und dieser Zwischenraum von Wärmeisolierstoff ausgefüllt ist.

11. Dacheindeckungselement nach einem der Ansprüche 1 bis 10, dadurch gekennzeichnet, dass ausser dem Durchflusskanal (7, 37) weitere Plattenkörper-Formteile, wie Übergreif- und Untergreifleisten (33, 35) und/oder Begrenzungswulste (45, 46), hohl ausgebildet sind.

12. Dacheindeckungselement nach einem der Ansprüche 1 bis 11, dadurch gekennzeichnet, dass der Lattenauflage-Abschnitt (47) und der Überdeckungs-Abschnitt (48) des Plattenkörpers zwischen den Übergreif- und Untergreifleisten (33, 35) mit Wärmeisolierstoff ausgefüllt sind.

**Claims**

1. Roofing element of synthetic material for winning solar energy, especially a roofing element being interchangeable with a commercially available one, comprising a flow channel (7, 37) for a heat transfer fluid provided in a plate body (1, 31), connecting elements formed at the ends of this flow channel for the connection with adjacent roofing elements and hooking elements (22, 41) fitting with a usual roof lathing, characterized in that the flow channel (7, 37) is a tubular cavity being formed into the plate body (1, 31) in such a way that the surface of the plate body remains unchanged according to the profile of the plate body, whereas its lower surface is bulged along the course of the flow channel.

2. Roofing element according to claim 1, characterized in that the flow channel (7, 37) is formed into the plate body (1, 31) by means of blow moulding.

3. Roofing element according to claim 1 or 2, characterized in that the flow channel (7, 37) extends meander- or wormshaped from the top to the bottom of the plate body.

4. Roofing element according to one of the claims 1 to 3, characterized in that the plate body (1, 31) is prolonged at its bottom by an overlapping apron (5).

5. Roofing element according to one of the claims 1 to 4, characterized in that the connecting elements provided at the ends of the flow channel (7, 37) are formed as insertion bores (9, 11) for taking up an insertion tube (14).

6. Roofing element according to claim 5, characterized in that the insertion tube (14) consists of insertion heads (15) and a flexible intermediate tube (17).

7. Roofing element according to one of the claims 1 to 6, characterized in that the insertion bore (9) at the top of the plate body ends even with the top (10).

8. Roofing element according to claim 7, characterized in that this insertion bore (9) is connected with the adjoint head ribs (41) by means of folds (51) which were formed during the blow moulding process.

9. Roofing element according to one of the claims 1 to 8, characterized in that the insertion bore (11) provided at the outlet of the flow channel is formed as a recess (49) in a channel enlargement (50).

10. Roofing element according to one of the claims 1 to 9, characterized in that at the lower surface of the overlapping and supporting ledges (33, 35) between the lathsupporting section (47) and the overlapping section (48) boundary beadings (45, 46) which ascend above the bulges of the flow channel are formed and that this space is filled with thermal insulating material.

11. Roofing element according to one of the claims 1 to 10, characterized in that apart from the flow channel (7, 37) other formed parts of the plate body, such as the overlapping and supporting ledges (33, 35) and/or boundary beadings (45, 46) are hollow.

12. Roofing element according to one of the claims 1 to 11, characterized in that the lath-supporting section (47) and the overlapping section (48) of the plate body, between the overlapping and supporting ledges (33, 35) are filled with thermal insulating material.

**Revendications**

1. Elément de couverture en matière synthétique pour la récupération de l'énergie solaire, en particulier un élément de couverture interchangeable avec un élément de couverture usuel dans le commerce, présentant un canal d'écoulement (7, 37) prévu dans un corps de plaque (1, 31) pour un liquide caloporteur, des organes de raccordement formes aux extrémités de ce canal d'écoulement pour la liaison avec des éléments de couverture adjacents, ainsi que des organes d'accrochage (22, 41) convenant à un lattis usuel de toit, caractérisé par le fait que le canal d'écoulement (7, 37) est formé dans le corps de plaque (1, 31) en tant que cavité tubulaire, de telle sorte que la face supérieure du corps de plaque reste inchangée conformément au profil de la plaque, tandis que sa face inférieure est bombée le long du parcours du canal d'écoulement.

2. Elément de couverture selon la revendication 1, caractérisé par le fait que, le canal d'écoulement (7, 37) est réalisé, dans le corps de plaque (1, 31), par formage par soufflage.

3. Elément de couverture selon l'une des revendications 1 et 2, caractérisé par le fait que le canal d'écoulement (7, 37) s'étend sous forme sinueuse de l'extrémité de tête à l'extrémité de pied du corps de plaque.

4. Elément de couverture selon les revendications 1 à 3, caractérisé par le fait que le corps de plaque (1, 31) est prolongé à son extrémité de pied par un tablier de recouvrement (5).

5. Elément de couverture selon l'une des revendications 1 à 4, caractérisé par le fait que les organes de raccordement prévus aux extrémités du canal d'écoulement (7, 37) sont constitués sous la forme de perforations d'insertion (9, 11) destinées à loger un tube d'insertion (14).

6. Elément de couverture selon la revendication 5, caractérisé par le fait que le tube d'insertion (14) est formé de têtes d'insertion (15) et d'un tube intermédiaire flexible (17).

7. Elément de couverture selon l'une des revendications 1 à 6, caractérisé par le fait que la perforation d'insertion (9), à l'extrémité de tête du corps de plaque, se termine au niveau du bord de tête (10).

8. Elément de couverture selon la revendication 7, caractérisé par le fait que cette perforation d'insertion (9) est reliée aux nervures de tête adjacentes (41) au moyen de plis d'écrasement (51) formés lors du formage par soufflage.

9. Elément de couverture selon les revendications 1 à 8, caractérisé par le fait que la perforation d'insertion (11) prévue à la sortie du canal d'écoulement est réalisée sous forme de renfoncement (49) dans un élargissement (50) du canal.

10. Elément de couverture selon l'une des revendications 1 à 9, caractérisé par le fait que sur la face inférieure des lattes d'engagement par dessus et par dessous (33, 35), entre la partie (47) d'appui de lattes et la partie (48) de recouvrement sont formés des bourrelets de limitation (45, 46) se dressant audessus des bombements du canal d'écoulement et que cet espacement est rempli de matière calorifuge.

11. Elément de couverture selon l'une des revendications 1 à 10, caractérisé par le fait qu'outre le canal d'écoulement (7, 37), d'autres parties façonnées du corps de plaque, telles que les lattes d'engagement par dessus et par dessous (33, 35) et/ou les bourrelets de limitation (45, 46) sont de forme creuse.

12. Elément de couverture selon l'une des revendications 1 à 11, caractérisé par le fait que la partie (47) d'appui des lattes et la partie (48) de recouvrement du corps de plaque, entre les lattes d'engagement par dessus et par dessous (33, 35), sont remplies de matière calorifuge.

Fig.1

Fig.2

Fig. 3

Fig.4

Fig. 5

Fig. 7

Fig. 6

Fig. 8